# EUROPEAN PATENT APPLICATION

(11) **EP 4 773 397 A1**
(43) Date of publication of application: **08.07.2026**
(21) Application number: 24918238.7
(22) Date of filing: 29.11.2024
(51) Int. Cl.: H01M 50/474, H01M 50/477, H01M 10/0525

(54) **ELECTROCHEMICAL DEVICE AND ELECTRIC APPARATUS**

(30) Priority: 17.01.2024 CN 202410071249
(71) Applicant: Dongguan Amperex Technology Limited, Dongguan City, Guangdong Province 523000 (CN)
(72) Inventor: CHEN, Tengteng, Dongguan, Guangdong 523000 (CN); DENG, Daolin, Dongguan, Guangdong 523000 (CN); LI, Xun, Dongguan, Guangdong 523000 (CN); CHEN, Wen, Dongguan, Guangdong 523000 (CN)
(74) Representative: Kraus & Lederer PartGmbB
(86) International application number: PCT/CN2024/135817
(87) International publication number: WO 2025/152630

(57) **Abstract**

An electrochemical apparatus (100) and an electric device (1000) are provided. The electrochemical apparatus (100) includes a housing (10), an electrode assembly (20), and a first adhesive component (30). The electrode assembly (20) is disposed within the housing (10). The electrode assembly (20) includes a first side surface (21) and a second side surface (22) opposite each other along a first direction, and a third side surface (23) and a fourth side surface (24) opposite each other along a second direction. The second direction is perpendicular to the first direction. The first adhesive component (30) includes a first side portion (31) and a second side portion (32) opposite each other. The first side portion (31) includes a first adhesive region (311), a first non-adhesive region (312), and a second adhesive region (313) arranged sequentially. The first adhesive region (311) is adhered to the first side surface (21). The second adhesive region (313) is adhered to the second side surface (22). The second side portion (32) includes a third adhesive region (321). The third adhesive region (321) is adhered to the housing (10). Along the second direction, a projection of the first non-adhesive region (312) overlaps the third side surface (23), and a projection of the third adhesive region (321) overlaps the third side surface (23). The first non-adhesive region (312) of the first adhesive component (30) is not adhered to the third side surface (23), which is conducive to reducing the risk of damage to the electrode assembly (20).

## Description

### TECHNICAL FIELD

This application relates to the field of energy storage technology, and in particular, to an electrochemical apparatus and an electric device.

### BACKGROUND

When a battery or an electric device equipped with a battery is subjected to an impact such as a drop, there is a risk of movement of an electrode assembly inside the battery. The movement of the electrode assembly easily causes battery failure. To address the issue of battery failure, a double-sided adhesive layer is typically disposed between an electrode assembly and a housing of an electrochemical apparatus, with one side adhered to the housing and the other side adhered to the electrode assembly.

When the battery is subjected to an impact, if the adhesiveness of the adhesive layer is excessively low, the adhesive layer is prone to detaching from the electrode assembly or the housing, leading to movement of the electrode assembly relative to the housing, which may cause cell failure. If the adhesiveness of the adhesive layer is excessively high, the adhesive layer transfers the impact force to an outer foil of the electrode assembly, which easily causes tearing of the outer foil of the electrode assembly.

### SUMMARY

In view of this, this application provides an electrochemical apparatus and an electric device, aiming to reduce the risk of movement of an electrode assembly relative to a housing and the risk of damage to an outer foil of the electrode assembly.

According to a first aspect of this application, an electrochemical apparatus is provided. The electrochemical apparatus includes a housing, an electrode assembly, and a first adhesive component, where the electrode assembly is disposed within the housing; the electrode assembly includes a first side surface, a second side surface, a third side surface, and a fourth side surface; along a first direction, the first side surface and the second side surface are disposed opposite each other; along a second direction, the third side surface and the fourth side surface are disposed opposite each other; the third side surface and the fourth side surface are located between the first side surface and the second side surface; the first direction is perpendicular to the second direction; the first adhesive component is disposed between the housing and the electrode assembly, and the first adhesive component includes a first side portion and a second side portion opposite each other; the first side portion includes a first adhesive region, a first non-adhesive region, and a second adhesive region arranged sequentially; the first adhesive region is adhered to the first side surface; the second adhesive region is adhered to the second side surface; the second side portion includes a third adhesive region, the third adhesive region being adhered to the housing; and along the second direction, a projection of the first non-adhesive region overlaps the third side surface, and a projection of the third adhesive region overlaps the third side surface.

The electrode assembly is connected to the housing through the first adhesive region, the second adhesive region, and the third adhesive region of the first adhesive component, which is conducive to restricting relative movement between the electrode assembly and the housing, thereby helping to reduce the risk of movement of the electrode assembly within the housing when the electrochemical apparatus is subjected to an impact. The first adhesive component is provided with the first non-adhesive region not adhered to the first side surface, which is conducive to reducing the impact force transferred by the first adhesive component to the electrode assembly when the electrochemical apparatus is subjected to an impact, thereby reducing the risk of damage to an outer electrode plate of the electrode assembly. Furthermore, the first adhesive region is adhered to the first side surface, and the second adhesive region is adhered to the second side surface, dispersing the impact force transferred by the first adhesive component to the electrode assembly, helping to further reduce the risk of movement of the electrode assembly within the housing when the electrochemical apparatus is subjected to an impact, and also helping to further reduce the risk of damage to the outer electrode plate of the electrode assembly.

In any one of the above optional embodiments, the first direction is a thickness direction of the electrode assembly.

In any one of the above optional embodiments, the second direction is a thickness direction of the electrode assembly. This allows the first adhesive component to be adhered to a side surface of the electrode assembly in a width direction or a length direction, thereby reducing the risk of damage to the outer electrode plate of the electrode assembly. Furthermore, the second direction being the thickness direction of the electrode assembly is also conducive to increasing an adhesion area between the first adhesive component and the housing, and enhancing the adhesion strength between the first adhesive component and the housing.

In any one of the above optional embodiments, the first non-adhesive region includes a first non-adhesive sub-region and a second non-adhesive sub-region, the second non-adhesive sub-region being located between the first adhesive region and the first non-adhesive sub-region, where along the second direction, a projection of the first non-adhesive sub-region covers the third side surface, and along the first direction, a projection of the second non-adhesive sub-region overlaps the first side surface. Such an arrangement is conducive to allowing the first non-adhesive region to extend to one side of the first side surface, reducing the impact force transferred by the first adhesive component to the electrode assembly, and further reducing the pulling force of the first adhesive component on the first side surface, thereby reducing the risk of damage to the outer electrode plate of the electrode assembly.

In any one of the above optional embodiments, the first non-adhesive region includes a first non-adhesive sub-region and a third non-adhesive sub-region, the third non-adhesive sub-region being located between the second adhesive region and the first non-adhesive sub-region, where along the second direction, a projection of the first non-adhesive sub-region covers the third side surface, and along the first direction, a projection of the third non-adhesive sub-region overlaps the second side surface. Such an arrangement is conducive to allowing the first non-adhesive region to extend to one side of the second side surface, reducing the impact force transferred by the first adhesive component to the electrode assembly, and further reducing the pulling force of the first adhesive component on the second side surface, thereby reducing the risk of damage to the outer electrode plate of the electrode assembly.

In any one of the above optional embodiments, the housing includes a first sidewall and a second sidewall opposite each other along the first direction, and a third sidewall and a fourth sidewall opposite each other along the second direction; the first side surface is adjacent to the first sidewall; the second side surface is adjacent to the second sidewall; and the third side surface is adjacent to the third sidewall.

In any one of the above optional embodiments, along the second direction, the projection of the third adhesive region covers the third side surface, which is conducive to enhancing the adhesion strength between the housing and the first adhesive component, and reducing the risk of detachment of the first adhesive component from the housing, thereby facilitating suppression of movement of the electrode assembly.

In any one of the above optional embodiments, the third adhesive region includes a first adhesive sub-region and a second adhesive sub-region, where the first adhesive sub-region is located between the third side surface and the third sidewall, and the second adhesive sub-region is located between the first side surface and the first sidewall. Such an arrangement is conducive to enhancing the adhesion strength between the housing and the first adhesive component, and reducing the risk of detachment of the first adhesive component from the housing, thereby facilitating suppression of movement of the electrode assembly.

In any one of the above optional embodiments, along the first direction, a projection of the third adhesive region does not overlap the first side surface. Such an arrangement is conducive to reducing or eliminating a portion of the first adhesive component adhered to both the housing and the electrode assembly, and allowing the first adhesive component to more easily absorb the force transferred from the housing through deformation dissipation when the electrochemical apparatus is subjected to an impact, thereby reducing the risk of damage to the outer electrode plate of the electrode assembly.

In any one of the above optional embodiments, the third adhesive region includes a first adhesive sub-region and a third adhesive sub-region, where the first adhesive sub-region is located between the third side surface and the third sidewall, and the third adhesive sub-region is located between the second side surface and the second sidewall. Such an arrangement is conducive to enhancing the adhesion strength between the housing and the first adhesive component, and reducing the risk of detachment of the first adhesive component from the housing, thereby facilitating suppression of movement of the electrode assembly.

In any one of the above optional embodiments, along the first direction, a projection of the third adhesive region does not overlap the second side surface. Such an arrangement is conducive to reducing or eliminating a portion of the first adhesive component adhered to both the housing and the electrode assembly, and allowing the first adhesive component to more easily absorb the force transferred from the housing through deformation dissipation when the electrochemical apparatus is subjected to an impact, thereby reducing the risk of damage to the outer electrode plate of the electrode assembly.

In any one of the above optional embodiments, the first direction is a thickness direction of the electrode assembly; and the first adhesive region includes a fourth adhesive sub-region and a fifth adhesive sub-region, where the fourth adhesive sub-region is located between the first side surface and the first sidewall, and the fifth adhesive sub-region is located between the third side surface and the third sidewall. Such an arrangement allows the first adhesive component to be adhered to a portion of the third side surface, increasing an adhesion area between the first adhesive component and the electrode assembly and expanding the distribution of the adhesive region, thereby helping to enhance the adhesion strength between the first adhesive component and the third side surface, and facilitating suppression of movement of the electrode assembly.

In any one of the above optional embodiments, the first direction is a thickness direction of the electrode assembly; and the second adhesive region includes a sixth adhesive sub-region and a seventh adhesive sub-region, where the sixth adhesive sub-region is located between the second side surface and the second sidewall, and the seventh adhesive sub-region is located between the third side surface and the third sidewall. Such an arrangement allows the first adhesive component to be adhered to a portion of the third side surface, increasing an adhesion area between the first adhesive component and the electrode assembly and expanding the distribution of the adhesive region, thereby helping to enhance the adhesion strength between the first adhesive component and the third side surface, and facilitating suppression of movement of the electrode assembly.

In any one of the above optional embodiments, the first direction is a thickness direction of the electrode assembly; along the first direction, a thickness of the electrode assembly is T; and along the second direction, a width of the electrode assembly is W; and a length of the projection of the third adhesive region along the second direction in the first direction is T₁, satisfying 0.5T≤T₁≤T. This is conducive to allowing the first adhesive component 30 to suppress movement of the electrode assembly and reducing the risk of damage to the outer electrode plate of the electrode assembly.

In any one of the above optional embodiments, the first direction is a thickness direction of the electrode assembly; and a length of a projection of the first adhesive region along the first direction in the second direction is W₁, satisfying 0.1W≤W₁≤0.5W. This is conducive to allowing the first adhesive component 30 to suppress movement of the electrode assembly and reducing the risk of damage to the outer electrode plate of the electrode assembly.

In any one of the above optional embodiments, the first direction is a thickness direction of the electrode assembly; and a length of a projection of the second adhesive region along the first direction in the second direction is W₂, satisfying 0.1W≤W₂≤0.5W. This is conducive to allowing the first adhesive component 30 to suppress movement of the electrode assembly and reducing the risk of damage to the outer electrode plate of the electrode assembly.

In any one of the above optional embodiments, the first direction is a thickness direction of the electrode assembly; and along the second direction, a distance between the third adhesive region and the first adhesive region is h₁, where h₁≤0.25T.

In any one of the above optional embodiments, the first direction is a thickness direction of the electrode assembly; and along the second direction, a distance between the third adhesive region and the second adhesive region is h₂, where h₂≤0.25T.

In any one of the above optional embodiments, the second direction is a thickness direction of the electrode assembly; along the second direction, a thickness of the electrode assembly is T; and along the first direction, a width of the electrode assembly is W; and a length of the projection of the third adhesive region along the second direction in the first direction is L₁, satisfying 0.5W≤L₁≤W.

In any one of the above optional embodiments, the second direction is a thickness direction of the electrode assembly; and a length of a projection of the first adhesive region along the first direction in the second direction is L₂, satisfying 0.5T≤L₂≤T.

In any one of the above optional embodiments, the second direction is a thickness direction of the electrode assembly; and a length of a projection of the second adhesive region along the first direction in the second direction is L₃, satisfying 0.5T≤L₃≤T.

In any one of the above optional embodiments, the second direction is a thickness direction of the electrode assembly; and along the first direction, a distance between the third adhesive region and the first adhesive region is h₃, satisfying h₃≤0.25W.

In any one of the above optional embodiments, the second direction is a thickness direction of the electrode assembly; and along the first direction, a distance between the third adhesive region and the second adhesive region is h₄, satisfying h₄≤0.25W.

In any one of the above optional embodiments, the first adhesive component includes a first substrate layer, a first adhesive layer, a second adhesive layer, and a third adhesive layer; the first substrate layer is disposed between the housing and the electrode assembly; the first adhesive layer is disposed on a surface of the first substrate layer facing the first side surface; the second adhesive layer is disposed on a surface of the first substrate layer facing the second side surface; and the third adhesive layer is disposed on a surface of the first substrate layer facing the housing. Such an arrangement allows the first adhesive component to be formed by an adhesive tape with adhesive layers on double sides, which, compared to an adhesive structure formed by multiple adhesive tapes through adhesion, is conducive to reducing an overall thickness of the electrochemical apparatus and increasing an energy density of the electrochemical apparatus.

In any one of the above optional embodiments, the electrochemical apparatus further includes a second adhesive component; the second adhesive component is disposed between the housing and the electrode assembly; the second adhesive component includes a third side portion and a fourth side portion opposite each other; the third side portion includes a fourth adhesive region, a second non-adhesive region, and a fifth adhesive region arranged sequentially; the fourth adhesive region is adhered to the first side surface; the fifth adhesive region is adhered to the second side surface; and the fourth side portion includes a sixth adhesive region, the sixth adhesive region being adhered to the housing; where along the second direction, a projection of the second non-adhesive region overlaps the fourth side surface, and a projection of the sixth adhesive region overlaps the fourth side surface. Thus, the first adhesive component and the second adhesive component are connected to the housing, which is conducive to reducing the risk of movement of the electrode assembly within the housing when the electrochemical apparatus is subjected to an impact. In addition, the first adhesive component and the second adhesive component transfer an impact force of the housing to two sides of the electrode assembly in the second direction, which is conducive to dispersing the impact force on the electrode assembly, and further reducing the risk of damage to the outer electrode plate of the electrode assembly.

According to a second aspect of this application, an electric device is provided, including the electrochemical apparatus according to any one of the foregoing embodiments. The electrochemical apparatus has a reduced risk of movement in a drop test and a reduced risk of damage to the electrode assembly, thereby improving the reliability of the electric device.

### BRIEF DESCRIPTION OF DRAWINGS

FIG. 1 is a schematic structural diagram of an electrochemical apparatus according to an embodiment of this application.
FIG. 2 is a schematic exploded view of the electrochemical apparatus shown in FIG. 1.
FIG. 3 is a schematic cross-sectional view of an electrochemical apparatus according to an embodiment of this application.
FIG. 4 is a schematic cross-sectional view of an electrochemical apparatus according to an embodiment of this application.
FIG. 5 is a schematic cross-sectional view of an electrochemical apparatus according to an embodiment of this application.
FIG. 6 is a schematic cross-sectional view of an electrochemical apparatus according to an embodiment of this application.
FIG. 7 is a schematic cross-sectional view of an electrochemical apparatus according to an embodiment of this application.
FIG. 8 is a schematic cross-sectional view of an electrochemical apparatus according to an embodiment of this application.
FIG. 9 is a schematic partial cross-sectional view of an electrochemical apparatus according to an embodiment of this application.
FIG. 10 is a side view of a first adhesive component according to another embodiment of this application.
FIG. 11 is a schematic partial cross-sectional view of an electrochemical apparatus according to an embodiment of this application.
FIG. 12 is a side view of a first adhesive component according to another embodiment of this application.
FIG. 13 is a schematic diagram of an electric device according to an embodiment of this application.

**Description of reference signs of main components**

| | |
|---|---|
| Electrochemical apparatus | 100 |
| Housing | 10 |
| First sidewall | 11 |
| Second sidewall | 12 |
| Third sidewall | 13 |
| Fourth sidewall | 14 |
| Fifth sidewall | 15 |
| Sixth sidewall | 16 |
| Electrode assembly | 20 |
| First side surface | 21 |
| First region | 211 |
| Second region | 212 |
| Third region | 213 |
| Second side surface | 22 |
| Third side surface | 23 |
| Fourth side surface | 24 |
| Fifth side surface | 25 |
| Sixth side surface | 26 |
| First adhesive component | 30 |
| First side portion | 31 |
| First adhesive region | 311 |
| Fourth adhesive sub-region | 311a |
| Fifth adhesive sub-region | 311b |
| First adhesive layer | 3111 |
| First non-adhesive region | 312 |
| First non-adhesive sub-region | 3121 |
| Second non-adhesive sub-region | 3122 |
| Third non-adhesive sub-region | 3123 |
| First non-adhesive layer | 312a |
| Second adhesive region | 313 |
| Sixth adhesive sub-region | 313a |
| Seventh adhesive sub-region | 313b |
| Second adhesive layer | 3131 |
| Second side portion | 32 |
| Third adhesive region | 321 |
| First adhesive sub-region | 321a |
| Second adhesive sub-region | 321b |
| Third adhesive sub-region | 321c |
| Third adhesive layer | 3211 |
| Fourth adhesive layer | 3212 |
| Fifth adhesive layer | 3213 |
| Third non-adhesive region | 322 |
| Third non-adhesive layer | 322a |
| Fourth non-adhesive region | 323 |
| Fourth non-adhesive layer | 323a |
| Substrate layer | 301 |
| Second adhesive component | 40 |
| Third side portion | 41 |
| Fourth adhesive region | 411 |
| Second non-adhesive region | 412 |
| Fifth adhesive region | 413 |
| Fourth side portion | 42 |
| Sixth adhesive region | 421 |
| Tab | 50 |
| Device body | 200 |
| Electric device | 1000 |
| First direction | X |
| Second direction | Y |
| Third direction | Z |

### DETAILED DESCRIPTION

The technical solutions in some embodiments of this application are described below. Apparently, the described embodiments are only some rather than all of these embodiments of this application.

It should be noted that in this application, a center of a region refers to a centroid of a planar shape of the region when the region is a continuous entirety. It can be understood that the centroid of the planar shape can be determined by a suspension method, where the planar shape is suspended with a thin thread, a straight line is drawn in a vertical direction from a starting point of the thin thread, the planar shape is suspended again from a different endpoint, and another straight line is drawn in the same manner, and an intersection of the two straight lines is the centroid of the planar shape. When the region is formed by multiple discrete regions, the center of the region is a center of a smallest circumscribed circle including the multiple discrete regions. It can be understood that the smallest circumscribed circle is a circle that includes the multiple discrete regions and has a smallest radius.

It can be understood that when a component is considered to be "connected" to another component, the component may be directly connected to the another component, or an intermediate component may be present therebetween. When a component is considered to be "disposed on" another component, the component may be directly disposed on the another component, or an intermediate component may be present therebetween. The terms "top", "bottom", and similar expressions used herein are for illustrative purposes only.

The terms "first," "second," and the like are used only to distinguish different objects and should not be understood as indicating or implying relative importance or implying the number, specific order, or primary-secondary relationship of the indicated technical features.

The term "perpendicular" is used to describe an ideal state between two components. In actual production or use, an approximately perpendicular state may be present between the two components. The components described as "perpendicular" may not be absolutely straight lines or planes but may be generally straight or planar. From a macro perspective, a component can be considered as a "straight line" or "plane" as long as the overall extension direction is a straight line or a plane.

It should be recognized that the dimensions and thicknesses of the components shown in the drawings are for better understanding and more convenient description, and this application is not limited to the dimensions and thicknesses shown in the drawings.

Unless otherwise defined, all technical and scientific terms used herein have the same meaning as commonly understood by those skilled in the art of this application. The terms used in the description of this application herein are only for the purpose of describing specific embodiments and are not intended to limit this application.

The following describes some embodiments of this application with reference to the drawings. The following embodiments and features in these embodiments may be combined with each other in the absence of conflict.

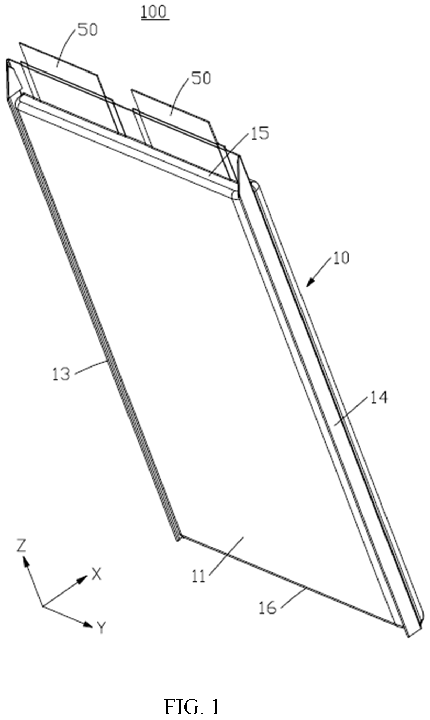

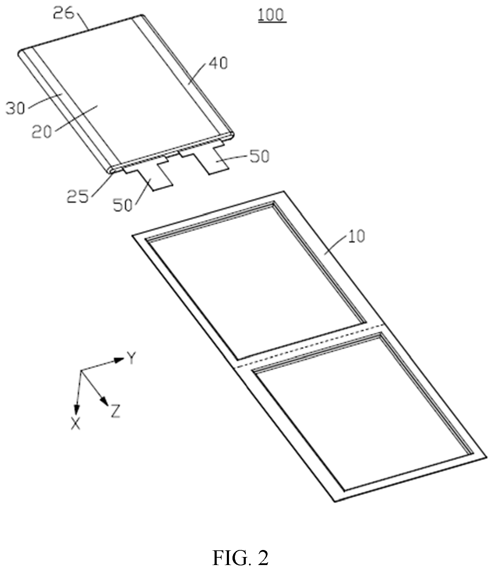

Referring to FIG. 1 and FIG. 2, an embodiment of this application provides an electrochemical apparatus 100. The electrochemical apparatus 100 includes a housing 10, an electrode assembly 20, and a first adhesive component 30. The electrode assembly 20 is disposed within the housing 10. The first adhesive component 30 is disposed between the housing 10 and the electrode assembly 20, and the first adhesive component 30 is configured to adhere the housing 10 to the electrode assembly 20.

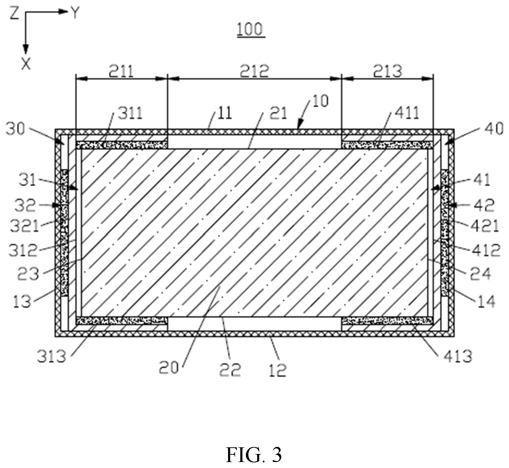

In some embodiments, referring to FIG. 1 and FIG. 3, the housing 10 includes a first sidewall 11 and a second sidewall 12 disposed opposite each other along a first direction X. The electrode assembly 20 is located between the first sidewall 11 and the second sidewall 12.

In some embodiments, referring to FIG. 1 and FIG. 3, the housing 10 further includes a third sidewall 13, a fourth sidewall 14, a fifth sidewall 15, and a sixth sidewall 16. The third sidewall 13 and the fourth sidewall 14 are disposed opposite each other along a second direction Y. The fifth sidewall 15 and the sixth sidewall 16 are disposed opposite each other along a third direction Z. The first direction X, the second direction Y, and the third direction Z are perpendicular to each other. The first sidewall 11, the second sidewall 12, the third sidewall 13, the fourth sidewall 14, the fifth sidewall 15, and the sixth sidewall 16 enclose a space for accommodating the electrode assembly 20.

In some embodiments, the electrochemical apparatus 100 is a pouch battery. The housing 10 is an aluminum-plastic film. In some other embodiments, the electrochemical apparatus 100 is a steel-shell battery, and the housing 10 is a steel shell.

In some embodiments, the electrode assembly 20 includes a positive electrode plate, a negative electrode plate, and a separator. The positive electrode plate, the negative electrode plate, and the separator may be stacked to form a stacked structure. The positive electrode plate, the negative electrode plate, and the separator are alternatively stacked and then wound to form a wound structure.

In some embodiments, the positive electrode plate includes a positive electrode current collector and a positive electrode active material layer disposed on the positive electrode current collector. The negative electrode plate includes a negative electrode current collector and a negative electrode active material layer disposed on the negative electrode current collector.

In some embodiments, a portion of the positive electrode current collector is provided with the positive electrode active material layer, and another portion of the positive electrode current collector is not provided with the positive electrode active material layer. A portion of the negative electrode current collector is provided with the negative electrode active material layer, and another portion of the negative electrode current collector is not provided with the negative electrode active material layer.

The positive electrode current collector and the negative electrode current collector may each be a metal layer. As an illustrative example, the positive electrode current collector may be a metal layer including at least one of aluminum, nickel, tantalum, or titanium, such as an aluminum foil. The positive electrode active material layer includes a positive electrode active material, and the positive electrode active material may include at least one of lithium cobalt oxide, lithium nickel cobalt manganese oxide, lithium nickel cobalt aluminate, lithium iron phosphate, lithium manganese iron phosphate, or lithium manganese oxide. The negative electrode current collector may be a metal layer including at least one of copper, nickel, tantalum, or titanium, such as a copper foil. The negative electrode active material layer includes a negative electrode active material, and the negative electrode active material may include at least one of graphite, hard carbon, soft carbon, silicon, a silicon-oxygen material, or a silicon-carbon material.

In some embodiments, an outermost layer of the electrode assembly 20 includes a positive electrode current collector layer not provided with the positive electrode active material layer, and the positive electrode current collector is an aluminum foil.

In some embodiments, referring to FIG. 3, the electrode assembly 20 includes a first side surface 21, a second side surface 22, and a third side surface 23. Along the first direction X, the first side surface 21 and the second side surface 22 are disposed opposite each other, and the third side surface 23 is located between the first side surface 21 and the second side surface 22.

In some embodiments, referring to FIG. 3, the first side surface 21 is adjacent to the first sidewall 11 compared to the second sidewall 12, the first side surface 21 is disposed opposite the first sidewall 11, and the second side surface 22 faces away from the first sidewall 11. The second side surface 22 is adjacent to the second sidewall 12 compared to the first sidewall 11, and the third side surface 23 is adjacent to the third sidewall 13 compared to the fourth sidewall 14.

In some embodiments, referring to FIG. 3, the first side surface 21 includes a first region 211, a second region 212, and a third region 213. Along the second direction Y, the second region 212 is located between the first region 211 and the third region 213.

In some embodiments, referring to FIG. 3, the electrode assembly 20 further includes a fourth side surface 24. The fourth side surface 24 is located between the first side surface 21 and the second side surface 22. The third side surface 23 and the fourth side surface 24 are disposed opposite each other along the second direction Y. The fourth side surface 24 is adjacent to the fourth sidewall 14 compared to the third sidewall 13.

In some embodiments, the electrode assembly 20 is a wound structure. The third side surface 23 and the fourth side surface 24 are curved side surfaces.

In some embodiments, referring to FIG. 2, the electrode assembly 20 further includes a fifth side surface 25 and a sixth side surface 26. The fifth side surface 25 and the sixth side surface 26 are disposed opposite each other along the third direction Z.

In some embodiments, referring to FIG. 1 and FIG. 2, the electrochemical apparatus 100 further includes a tab 50. The tab 50 is connected to the electrode assembly 20. Along the third direction Z, the tab 50 extends out of the housing 10 from the fifth side surface 25 or the sixth side surface 26 of the electrode assembly 20 to lead out a polarity of the electrode assembly 20. When the tab 50 is connected to the positive electrode plate of the electrode assembly 20, the tab 50 is a positive electrode tab 50. When the tab 50 is connected to the negative electrode plate of the electrode assembly 20, the tab 50 is a negative electrode tab 50. The tab 50 may be made of metallic copper or metallic aluminum, without specific limitation herein.

In some embodiments, referring to FIG. 3, the first adhesive component 30 includes a first side portion 31 and a second side portion 32 disposed opposite each other. The first side portion 31 is adjacent to the electrode assembly 20 compared to the second side portion 32. The first side portion 31 includes a first adhesive region 311, a first non-adhesive region 312, and a second adhesive region 313 arranged sequentially. The first adhesive region 311 is adhered to the first side surface 21. The second adhesive region 313 is adhered to the second side surface 22. The second side portion 32 includes a third adhesive region 321. The third adhesive region 321 is adhered to the housing 10. Along the second direction Y, a projection of the first non-adhesive region 312 overlaps the third side surface 23, and a projection of the third adhesive region 321 overlaps the third side surface 23. The second direction Y is perpendicular to the first direction X.

The electrode assembly 20 is connected to the housing 10 through the first adhesive region 311, the second adhesive region 313, and the third adhesive region 321 of the first adhesive component 30, which is conducive to restricting relative movement between the electrode assembly 20 and the housing 10, thereby helping to reduce the risk of movement of the electrode assembly 20 within the housing 10 when the electrochemical apparatus 100 is subjected to an impact. The first adhesive component 30 is provided with a first non-adhesive region 312 not adhered to the first side surface 21, which is conducive to reducing the impact force transferred by the first adhesive component 30 to the electrode assembly 20 when the electrochemical apparatus 100 is subjected to an impact, thereby reducing the risk of damage to an outer electrode plate of the electrode assembly 20. Furthermore, the first adhesive region 311 is adhered to the first side surface 21, and the second adhesive region 313 is adhered to the second side surface 22, dispersing the impact force transferred by the first adhesive component 30 to the electrode assembly 20, helping to further reduce the risk of movement of the electrode assembly 20 within the housing 10 when the electrochemical apparatus 100 is subjected to an impact, and also helping to further reduce the risk of damage to the outer electrode plate of the electrode assembly 20.

FIG. 3 is a schematic cross-sectional view of the electrochemical apparatus 100. To make the drawing clear, a detailed structure of the stacking or winding of the electrode plates of the electrode assembly 20 is omitted in the drawings of this application.

In some embodiments, referring to FIG. 3, the electrochemical apparatus 100 further includes a second adhesive component 40. The second adhesive component 40 is disposed between the housing 10 and the electrode assembly 20. The second adhesive component 40 includes a third side portion 41 and a fourth side portion 42 opposite each other. The third side portion 41 includes a fourth adhesive region 411, a second non-adhesive region 412, and a fifth adhesive region 413 arranged sequentially. The fourth adhesive region 411 is adhered to the first side surface 21. The fifth adhesive region 413 is adhered to the second side surface 22. The fourth side portion 42 includes a sixth adhesive region 421, and the sixth adhesive region 421 is adhered to the housing 10. Along the second direction Y, a projection of the second non-adhesive region 412 overlaps the fourth side surface 24, and a projection of the sixth adhesive region 421 overlaps the fourth side surface 24. The second non-adhesive region 412 is conducive to reducing the impact force transferred by the second adhesive component 40 to the electrode assembly 20 when the electrochemical apparatus 100 is subjected to an impact, thereby reducing the risk of damage to the outer electrode plate of the electrode assembly 20. Furthermore, the fourth adhesive region 411 is adhered to the first side surface 21, and the fifth adhesive region 413 is adhered to the second side surface 22, dispersing the impact force transferred by the second adhesive component 40 to the electrode assembly 20, helping to further reduce the risk of movement of the electrode assembly 20 within the housing 10 when the electrochemical apparatus 100 is subjected to an impact, and also helping to further reduce the risk of damage to the outer electrode plate of the electrode assembly 20.

In the above embodiments, the electrode assembly 20 is connected to the housing 10 through the first adhesive component 30 and the second adhesive component 40, which is conducive to reducing the risk of movement of the electrode assembly 20 within the housing 10 when the electrochemical apparatus 100 is subjected to an impact. In addition, the first adhesive component 30 and the second adhesive component 40 transfer an impact force of the housing 10 to two sides of the electrode assembly 20 in the second direction Y, which is conducive to dispersing the impact force on the electrode assembly 20, and further reducing the risk of damage to the outer electrode plate of the electrode assembly 20.

In some embodiments, referring to FIG. 3, the first region 211 is connected to the third side surface 23. The third region 213 is connected to the fourth side surface 24. The first adhesive region 311 is adhered to the first region 211. The fourth adhesive region 411 is adhered to the third region 213. This is conducive to allowing the first adhesive component 30 and the second adhesive component 40 to disperse the impact force to regions at two ends of the electrode assembly 20 along the second direction Y, helping to further reduce the risk of damage to the outer electrode plate of the electrode assembly 20.

Some embodiments of the first adhesive component 30 are described below. To make the drawings clear, a distance between closely spaced components is enlarged in the drawings. In addition, some embodiments of the second adhesive component 40 may refer to these embodiments of the first adhesive component 30.

In some embodiments, referring to FIG. 3, the first direction X is a thickness direction of the electrode assembly 20.

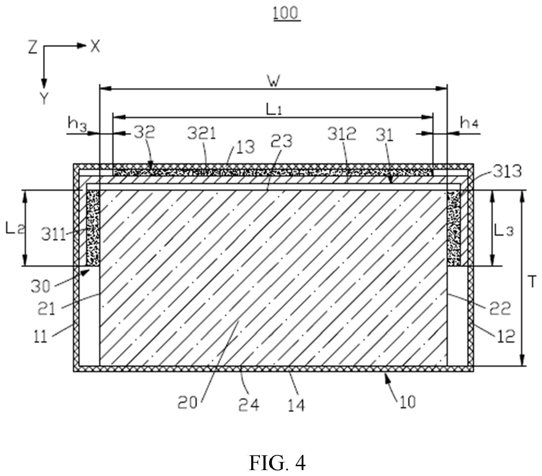

In some embodiments, referring to FIG. 4, the second direction Y is a thickness direction of the electrode assembly 20. Such an arrangement allows the first adhesive component 30 to be adhered to a side surface of the electrode assembly 20 in a width direction or a length direction, thereby reducing the risk of damage to the outer electrode plate of the electrode assembly 20. Furthermore, the second direction Y being the thickness direction of the electrode assembly 20 is also conducive to increasing an adhesion area between the first adhesive component 30 and the housing 10, and enhancing the adhesion strength between the first adhesive component 30 and the housing 10.

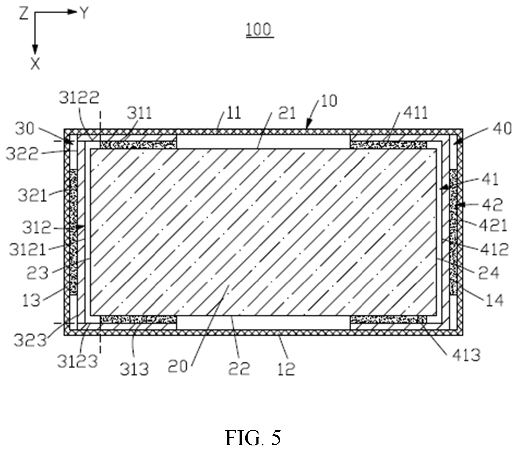

In some embodiments, referring to FIG. 5, the first non-adhesive region 312 includes a first non-adhesive sub-region 3121 and a second non-adhesive sub-region 3122. The second non-adhesive sub-region 3122 is located between the first adhesive region 311 and the first non-adhesive sub-region 3121. Along the second direction Y, a projection of the first non-adhesive sub-region 3121 covers the third side surface 23. Along the first direction X, a projection of the second non-adhesive sub-region 3122 overlaps the first side surface 21. Such an arrangement is conducive to allowing the first non-adhesive region 312 to extend to one side of the first side surface 21, reducing the impact force transferred by the first adhesive component 30 to the electrode assembly 20, and further reducing the pulling force of the first adhesive component 30 on the first side surface 21, thereby reducing the risk of damage to the outer electrode plate of the electrode assembly 20.

In some embodiments, referring to FIG. 5, the first non-adhesive region 312 includes a first non-adhesive sub-region 3121 and a third non-adhesive sub-region 3123. The third non-adhesive sub-region 3123 is located between the second adhesive region 313 and the first non-adhesive sub-region 3121. Along the second direction Y, a projection of the first non-adhesive sub-region 3121 covers the third side surface 23. Along the first direction X, a projection of the third non-adhesive sub-region 3123 overlaps the second side surface 22. Such an arrangement is conducive to allowing the first non-adhesive region 312 to extend to one side of the second side surface 22, reducing the impact force transferred by the first adhesive component 30 to the electrode assembly 20, and further reducing the pulling force of the first adhesive component 30 on the second side surface 22, thereby reducing the risk of damage to the outer electrode plate of the electrode assembly 20.

In some embodiments, referring to FIG. 5, the second side portion 32 further includes a third non-adhesive region 322 and a fourth non-adhesive region 323. The third adhesive region 321 is disposed between the third non-adhesive region 322 and the fourth non-adhesive region 323. Along the first direction X, a projection of the third non-adhesive region 322 overlaps the first adhesive region 311, and a projection of the fourth non-adhesive region 323 overlaps the second adhesive region 313. Along the second direction Y, a projection of the third adhesive region 321 is located within a projection range of the first non-adhesive region 312, the third non-adhesive region 322 overlaps the first non-adhesive region 312, and the fourth non-adhesive region 323 overlaps the first non-adhesive region 312.

In the above embodiments, the first adhesive component 30 includes a portion neither adhered to the housing 10 nor to the electrode assembly 20. In a case that the electrochemical apparatus 100 is subjected to an impact, the force from the housing 10 is absorbed through local deformation dissipation of the first adhesive component 30 when transferred to the electrode assembly 20, suppressing relative positional movement between the electrode assembly 20 and the housing 10, and further reducing the force transferred by the first adhesive component 30 to the electrode assembly 20, thereby reducing the risk of damage to the outer electrode plate of the electrode assembly 20.

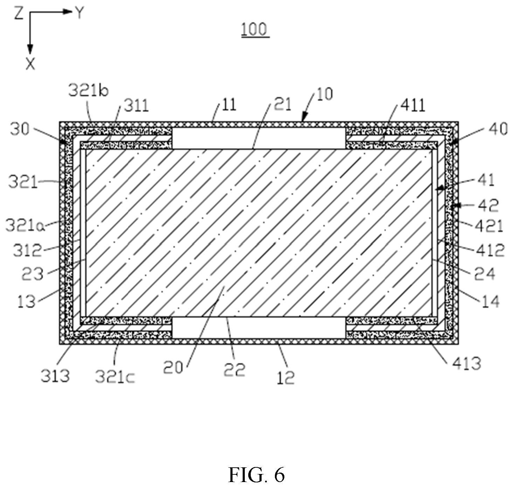

In some embodiments, referring to FIG. 6, along the second direction Y, the projection of the third adhesive region 321 covers the third side surface 23, which is conducive to increasing an adhesion area between the housing 10 and the first adhesive component 30, enhancing the adhesion strength between the housing 10 and the first adhesive component 30, and reducing the risk of detachment of the first adhesive component 30 from the housing 10, thereby facilitating suppression of movement of the electrode assembly 20.

In some embodiments, referring to FIG. 6, the third adhesive region 321 includes a first adhesive sub-region 321a and a second adhesive sub-region 321b. The first adhesive sub-region 321a is located between the third side surface 23 and the third sidewall 13. The second adhesive sub-region 321b is located between the first side surface 21 and the first sidewall 11. This is conducive to increasing an adhesion area between the housing 10 and the first adhesive component 30, enhancing the adhesion strength between the housing 10 and the first adhesive component 30, and reducing the risk of detachment of the first adhesive component 30 from the housing 10, thereby facilitating suppression of movement of the electrode assembly 20.

In some embodiments, referring to FIG. 6, the third adhesive region 321 includes a first adhesive sub-region 321a and a third adhesive sub-region 321c. The first adhesive sub-region 321a is located between the third side surface 23 and the third sidewall 13. The third adhesive sub-region 321c is located between the second side surface 22 and the second sidewall 12. This is conducive to increasing an adhesion area between the housing 10 and the first adhesive component 30, enhancing the adhesion strength between the housing 10 and the first adhesive component 30, and reducing the risk of detachment of the first adhesive component 30 from the housing 10, thereby facilitating suppression of movement of the electrode assembly 20.

In some embodiments, referring to FIG. 5, along the first direction X, a projection of the third adhesive region 321 does not overlap the first side surface 21. Such an arrangement is conducive to reducing or eliminating a portion of the first adhesive component 30 adhered to both the housing 10 and the electrode assembly 20, and allowing the first adhesive component 30 to more easily absorb the force transferred from the housing 10 through deformation dissipation when the electrochemical apparatus 100 is subjected to an impact, thereby reducing the risk of damage to the outer electrode plate of the electrode assembly 20.

In some embodiments, referring to FIG. 5, along the first direction X, a projection of the third adhesive region 321 does not overlap the second side surface 22. Such an arrangement is conducive to reducing or eliminating a portion of the first adhesive component 30 adhered to both the housing 10 and the electrode assembly 20, and allowing the first adhesive component 30 to more easily absorb the force transferred from the housing 10 through deformation dissipation when the electrochemical apparatus 100 is subjected to an impact, thereby reducing the risk of damage to the outer electrode plate of the electrode assembly 20.

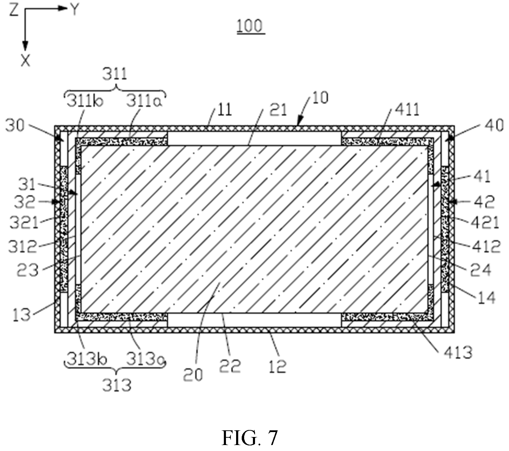

In some embodiments, referring to FIG. 7, the first direction X is a thickness direction of the electrode assembly 20. The first adhesive region 311 includes a fourth adhesive sub-region 311a and a fifth adhesive sub-region 311b. The fourth adhesive sub-region 311a is located between the first side surface 21 and the first sidewall 11. The fifth adhesive sub-region 311b is located between the third side surface 23 and the third sidewall 13. Such an arrangement allows the first adhesive component 30 to be adhered to a portion of the third side surface 23, increasing an adhesion area between the first adhesive component 30 and the electrode assembly 20 and expanding the distribution of the adhesive region, thereby helping to enhance the adhesion strength between the first adhesive component 30 and the third side surface 23, and facilitating suppression of movement of the electrode assembly 20.

In some embodiments, referring to FIG. 7, the first direction X is a thickness direction of the electrode assembly 20. The second adhesive region 313 includes a sixth adhesive sub-region 313a and a seventh adhesive sub-region 313b. The sixth adhesive sub-region 313a is located between the second side surface 22 and the second sidewall 12. The seventh adhesive sub-region 313b is located between the third side surface 23 and the third sidewall 13. Such an arrangement allows the first adhesive component 30 to be adhered to a portion of the third side surface 23, increasing an adhesion area between the first adhesive component 30 and the electrode assembly 20 and expanding the distribution of the adhesive region, thereby helping to enhance the adhesion strength between the first adhesive component 30 and the third side surface 23, and facilitating suppression of movement of the electrode assembly 20.

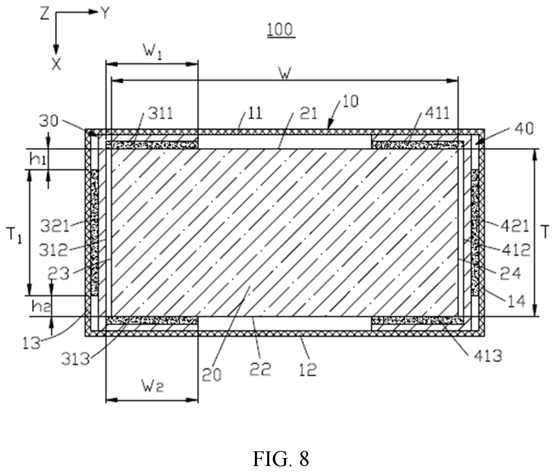

In some embodiments, referring to FIG. 8, the first direction X is a thickness direction of the electrode assembly 20. Along the first direction X, a thickness of the electrode assembly 20 is T; and along the second direction Y, a width of the electrode assembly 20 is W; and a length of a projection of the third adhesive region 321 along the second direction Y in the first direction X is T₁, satisfying 0.5T≤T₁≤T. This is conducive to allowing the first adhesive component 30 be suppress movement of the electrode assembly 20 and reducing the risk of damage to the outer electrode plate of the electrode assembly 20.

In some embodiments, referring to FIG. 8, the first direction X is a thickness direction of the electrode assembly 20. A length of a projection of the first adhesive region 311 along the first direction X in the second direction Y is W₁, satisfying 0.1W≤W₁≤0.5W. This is conducive to allowing the first adhesive component 30 to suppress movement of the electrode assembly 20 and reducing the risk of damage to the outer electrode plate of the electrode assembly 20.

In some embodiments, referring to FIG. 8, the first direction X is a thickness direction of the electrode assembly 20. A length of a projection of the second adhesive region 313 along the first direction X in the second direction Y is W₂, satisfying 0.1W≤W₂≤0.5W. This is conducive to allowing the first adhesive component 30 to suppress movement of the electrode assembly 20 and reducing the risk of damage to the outer electrode plate of the electrode assembly 20.

In some embodiments, referring to FIG. 8, the first direction X is a thickness direction of the electrode assembly 20. Along the second direction Y, a distance between the third adhesive region 321 and the first adhesive region 311 is h₁, where h₁≤0.25T. This is conducive to reducing a distance between adhesive regions on double sides of the first adhesive component 30, allowing the first adhesive component 30 to suppress movement of the electrode assembly 20, and reducing the risk of damage to the outer electrode plate of the electrode assembly 20.

In some embodiments, referring to FIG. 8, the first direction X is a thickness direction of the electrode assembly 20. Along the second direction Y, a distance between the third adhesive region 321 and the second adhesive region 313 is h₂, where h₂≤0.25T. This is conducive to reducing a distance between adhesive regions on double sides of the first adhesive component 30, allowing the first adhesive component 30 to suppress movement of the electrode assembly 20, and reducing the risk of damage to the outer electrode plate of the electrode assembly 20.

In some embodiments, referring to FIG. 4, the second direction Y is a thickness direction of the electrode assembly 20. Along the second direction Y, a thickness of the electrode assembly 20 is T; along the first direction X, a width of the electrode assembly 20 is W; and a length of the projection of the third adhesive region 321 along the second direction Y in the first direction X is L₁, satisfying 0.5W≤L₁≤W. This condition being satisfied is conducive to reducing the risk of movement of the electrode assembly 20 and the risk of damage to the outer electrode plate of the electrode assembly 20.

In some embodiments, referring to FIG. 4, the second direction Y is a thickness direction of the electrode assembly 20. A length of a projection of the first adhesive region 311 along the first direction X in the second direction Y is L₂, satisfying 0.5T≤L₂≤T. This condition being satisfied is conducive to reducing the risk of movement of the electrode assembly 20 and the risk of damage to the outer electrode plate of the electrode assembly 20.

In some embodiments, referring to FIG. 4, the second direction Y is a thickness direction of the electrode assembly 20. A length of a projection of the second adhesive region 313 along the first direction X in the second direction Y is L₃, satisfying 0.5T≤L₃≤T. This condition being satisfied is conducive to reducing the risk of movement of the electrode assembly 20 and the risk of damage to the outer electrode plate of the electrode assembly 20.

In some embodiments, referring to FIG. 4, the second direction Y is a thickness direction of the electrode assembly 20. Along the first direction X, a distance between the third adhesive region 321 and the first adhesive region 311 is h₃, satisfying h₃≤0.25W. This is conducive to reducing a distance between adhesive regions on double sides of the first adhesive component 30, allowing the first adhesive component 30 to suppress movement of the electrode assembly 20, and reducing the risk of damage to the outer electrode plate of the electrode assembly 20.

In some embodiments, referring to FIG. 4, the second direction Y is a thickness direction of the electrode assembly 20. Along the first direction X, a distance between the third adhesive region 321 and the second adhesive region 313 is h₄, satisfying h₄≤0.25W. This is conducive to reducing a distance between adhesive regions on double sides of the first adhesive component 30, allowing the first adhesive component 30 to suppress movement of the electrode assembly 20, and reducing the risk of damage to the outer electrode plate of the electrode assembly 20.

To verify the impact of the adhesive regions of the first adhesive component 30 on the electrochemical apparatus 100, the following drop test was conducted:

Lithium-ion pouch batteries with largest projection surfaces being rectangular were selected, and a comparison of drop test pass rates was performed. Each group consisted of 20 batteries for the drop test pass rate contrast experiment, and the batteries were tested in a drop sequence of six sides and four corners, with a drop height of 1.8 m. After the drop, it was observed whether the housings 10 were ruptured or had electrolyte leakage, and the number of batteries with the housings 10 that were ruptured or had electrolyte leakage was counted. If the housings 10 were neither ruptured or had electrolyte leakage, the lithium-ion pouch batteries were disassembled to observe whether the outer electrode plates of the electrode assemblies 20 were torn or damaged, and the number of batteries with torn or damaged outer electrode plates was counted. If the housings 10 were neither ruptured nor had electrolyte leakage, and the outer electrode plates are not torn or damaged, the batteries were determined to pass the test; otherwise, the batteries were determined to fail the test. The pass rate was equal to the number of batteries passed the test / 20 × 100%.

In the above test, the first direction X was a thickness direction of the electrode assembly 20; a thickness T of the electrode assembly 20 along the first direction X was 4.8 mm (millimeters); a width W of the electrode assembly 20 along the second direction Y was 64 mm; and a length L of the electrode assembly 20 along the third direction Z was 87 mm. In Example 16, referring to FIG. 6, the third adhesive region 321 included a first adhesive sub-region 321a, a second adhesive sub-region 321b, and a third adhesive sub-region 321c. The first adhesive sub-region 321a is located between the third side surface 23 and the third sidewall 13. The second adhesive sub-region 321b was located between the first side surface 21 and the first sidewall 11. The third adhesive sub-region 321c is located between the second side surface 22 and the second sidewall 12. A length T₁ of the first adhesive sub-region 321a in the first direction X was 4.8 mm. A length of the second adhesive sub-region 321b in the second direction Y was 12.8 mm. A length of the third adhesive sub-region 321c in the second direction Y was 12.8 mm. In Example 17, referring to FIG. 7, the first adhesive region 311 included a fourth adhesive sub-region 311a and a fifth adhesive sub-region 311b. The second adhesive region 313 included a sixth adhesive sub-region 313a and a seventh adhesive sub-region 313b. The fourth adhesive sub-region 311a was located between the first side surface 21 and the first sidewall 11. The fifth adhesive sub-region 311b was located between the third side surface 23 and the third sidewall 13. The sixth adhesive sub-region 313a was located between the second side surface 22 and the second sidewall 12. The seventh adhesive sub-region 313b was located between the third side surface 23 and the third sidewall 13. Lengths of the fourth adhesive sub-region 311a and the sixth adhesive sub-region 313a in the second direction Y were each 10.8 mm. Lengths of the fifth adhesive sub-region 311b and the seventh adhesive sub-region 313b in the first direction X were each 2 mm.

In the comparative example, a double-sided adhesive tape with a length of 60.9 mm and a width of 38 mm was used to adhere the first sidewall 11 to the first side surface 21. The dimensional data of the adhesive regions of the first adhesive component 30 and the test results from the above test were shown in Table 1 below.

**Table 1: Test results of dimensional variations of adhesive regions in first adhesive component 30**

| Group | Length W₁ of first adhesive region 311 (mm) | Length W₂ of second adhesive region 313 (mm) | Length T₁ of third adhesive region 321 (mm) | h₁ or h₂ (mm) | Number of housings with rupture or electrolyte leakage | Number of outer electrode plates torn or damaged | Pass rate (%) |
|---|---|---|---|---|---|---|---|
| Comparative example | - | - | - | - | 1 | 4 | 75 |
| Example 1 | 12.8 (0.2W) | 12.8 (0.2W) | 1.92 (0.4T) | 1.44 (0.3T) | 3 | 0 | 85 |
| Example 2 | 12.8 (0.2W) | 12.8 (0.2W) | 2.4 (0.5T) | 1.2 (0.25T) | 1 | 0 | 95 |
| Example 3 | 12.8 (0.2W) | 12.8 (0.2W) | 2.88 (0.6T) | 0.96 (0.2T) | 0 | 0 | 100 |
| Example 4 | 12.8 (0.2W) | 12.8 (0.2W) | 3.36 (0.7T) | 0.72 (0.15T) | 0 | 0 | 100 |
| Example 5 | 12.8 (0.2W) | 12.8 (0.2W) | 3.84 (0.8T) | 0.48 (0.1T) | 0 | 0 | 100 |
| Example 6 | 12.8 (0.2W) | 12.8 (0.2W) | 4.32 (0.9T) | 0.24 (0.05T) | 0 | 0 | 100 |
| Example 7 | 12.8 (0.2W) | 12.8 (0.2W) | 4.8 (1T) | 0 | 0 | 0 | 100 |
| Example 8 | 64 (1W) | 64 (1W) | 4.32 (0.9T) | 0.24 (0.05T) | 1 | 0 | 95 |
| Example 9 | 19.2 (0.3W) | 19.2 (0.3W) | 4.32 (0.9T) | 0.24 (0.05T) | 0 | 0 | 100 |
| Example 10 | 25.6 (0.4W) | 25.6 (0.4W) | 4.32 (0.9T) | 0.24 (0.05T) | 0 | 0 | 100 |
| Example 11 | 32 (0.5W) | 32 (0.5W) | 4.32 (0.9T) | 0.24 (0.05T) | 0 | 0 | 100 |
| Example 16 | 12.8 (0.2W) | 12.8 (0.2W) | 4.8 (Length of first adhesive sub-region 321a) | - | 0 | 2 | 90 |
| Example 17 | 10.8 (Length of fourth adhesive sub-region 311a) | 10.8 (Length of sixth adhesive sub-region 313a) | 4.32 | - | 0 | 1 | 95 |

Referring to the contents of Table 1 above, when at least one of the conditions 0.5T≤T₁≤T, 0.1W≤W₁≤0.5W, 0.1W≤W₂≤0.5W, h₁≤0.25T, or h₂≤0.25T is satisfied, the pass rate of the batteries in the drop test is higher. This is conducive to reducing the risk of movement of the electrode assembly 20 and the risk of damage to the outer electrode plate of the electrode assembly 20.

To verify the impact of the adhesive regions of the first adhesive component 30 on the electrochemical apparatus 100, the drop test recorded in Table 2 was also conducted. The difference between this test and the drop test recorded in Table 1 was that in the test in Table 2, the first direction X was a width direction of the electrode assembly 20; a width W of the electrode assembly 20 along the first direction X was 64 mm; a thickness T of the electrode assembly 20 along the second direction Y was 4.8 mm; and a length L of the electrode assembly 20 along the third direction Z was 87 mm.

In the comparative example in Table 2, a double-sided adhesive tape with a length of 60.9 mm and a width of 38 mm was used to adhere the first sidewall 11 to the first side surface 21. The dimensional data of the adhesive regions of the first adhesive component 30 and the test results from the above test were shown in Table 2 below.

**Table 2: Test results of dimensional variations of adhesive regions in first adhesive component 30**

| Group | Length L₁ of third adhesive region 321 (mm) | Length L₂ of first adhesive region 311 (mm) | Length L₃ of second adhesive region 313 (mm) | Distance h₃ between first adhesive region 311 and third adhesive region 321 (mm) | Distance h₄ between second adhesive region 313 and third adhesive region 321 (mm) | Number of housings with rupture or electrolyte leakage | Number of outer electrode plates torn or damaged | Pass rate (%) |
|---|---|---|---|---|---|---|---|---|
| Comparative example | - | - | - | - | - | 1 | 4 | 75 |
| Example 1 | 25.6 (0.4W) | 2.88 (0.6T) | 2.88 (0.6T) | 19.2 (0.3W) | 19.2 (0.3W) | 3 | 0 | 85 |
| Example 2 | 32 (0.5W) | 2.88 (0.6T) | 2.88 (0.6T) | 16 (0.25W) | 16 (0.25W) | 2 | 0 | 90 |
| Example 3 | 38.4 (0.6W) | 2.88 (0.6T) | 2.88 (0.6T) | 12.8 (0.2W) | 12.8 (0.2W) | 1 | 0 | 95 |
| Example 4 | 44.8 (0.7W) | 2.88 (0.6T) | 2.88 (0.6T) | 9.6 (0.15W) | 9.6 (0.15W) | 0 | 0 | 100 |
| Example 5 | 51.2 (0.8W) | 2.88 (0.6T) | 2.88 (0.6T) | 6.4 (0.1W) | 6.4 (0.1W) | 0 | 0 | 100 |
| Example 6 | 57.6 (0.9W) | 2.88 (0.6T) | 2.88 (0.6T) | 3.2 (0.05W) | 3.2 (0.05W) | 0 | 0 | 100 |
| Example 7 | 64 (1 W) | 2.88 (0.6T) | 2.88 (0.6T) | 0 | 0 | 0 | 0 | 100 |
| Example 8 | 44.8 (0.7W) | 1.92 (0.4T) | 1.92 (0.4T) | 9.6 (0.15W) | 9.6 (0.15W) | 0 | 3 | 85 |
| Example 9 | 44.8 (0.7W) | 2.4 (0.5T) | 2.4 (0.5T) | 9.6 (0.15W) | 9.6 (0.15W) | 0 | 2 | 90 |
| Example 10 | 44.8 (0.7W) | 3.36 (0.7T) | 3.36 (0.7T) | 9.6 (0.15W) | 9.6 (0.15W) | 0 | 0 | 100 |
| Example 11 | 44.8 (0.7W) | 3.84 (0.8T) | 3.84 (0.8T) | 9.6 (0.15W) | 9.6 (0.15W) | 0 | 0 | 100 |
| Example 12 | 44.8 (0.7W) | 4.32 (0.9T) | 4.32 (0.9T) | 9.6 (0.15W) | 9.6 (0.15W) | 0 | 0 | 100 |
| Example 13 | 44.8 (0.7W) | 4.8 (T) | 4.8 (0.4T) | 9.6 (0.15W) | 9.6 (0.15W) | 0 | 0 | 100 |

Referring to the contents of Table 2 above, when at least one of the conditions 0.5W≤L₁≤W, 0.5T≤L₂≤T, 0.5T≤L₃≤T, h₃≤0.25W, or h₄≤0.25W is satisfied, the pass rate of the batteries in the drop test is higher. This is conducive to reducing the risk of movement of the electrode assembly 20 and the risk of damage to the outer electrode plate of the electrode assembly 20.

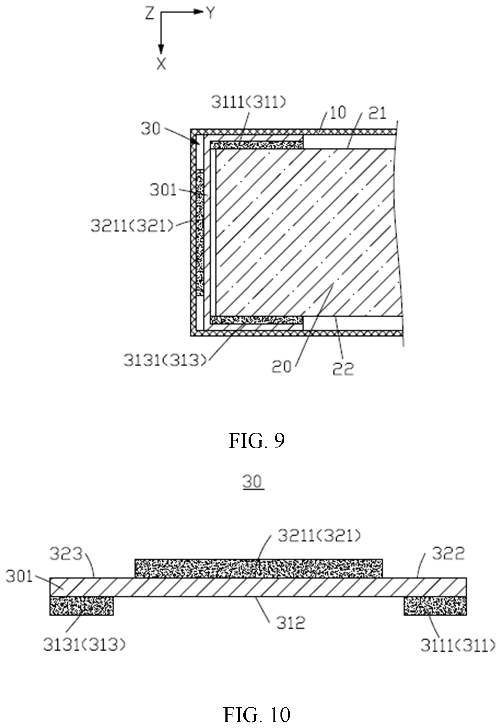

In some embodiments, referring to FIG. 9 and FIG. 10, the first adhesive component 30 includes a first substrate layer 301, a first adhesive layer 3111, a second adhesive layer 3131, and a third adhesive layer 3211. The first substrate layer 301 is disposed between the housing 10 and the electrode assembly 20. The first adhesive layer 3111 is disposed on a surface of the first substrate layer 301 facing the first side surface 21. The second adhesive layer 3131 is disposed on a surface of the first substrate layer 301 facing the second side surface 22. The third adhesive layer 3211 is disposed on a surface of the first substrate layer 301 facing the housing 10. In these embodiments, the first adhesive component 30 is formed by an adhesive tape with adhesive layers on double sides, which, compared to an adhesive structure formed by multiple adhesive tapes through adhesion, is conducive to reducing an overall thickness of the electrochemical apparatus 100 and increasing an energy density of the electrochemical apparatus 100.

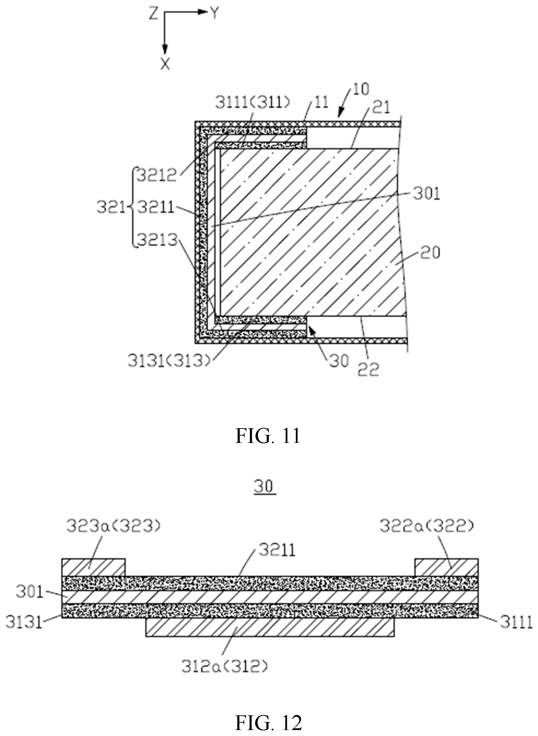

In some embodiments, referring to FIG. 11, the first adhesive component 30 further includes a fourth adhesive layer 3212. The fourth adhesive layer 3212 is disposed on a surface of the first substrate layer 301 facing the housing 10. The fourth adhesive layer 3212 is adhered to the first sidewall 11 of the housing 10. The fourth adhesive layer 3212 is conducive to enhancing the adhesion strength between the housing 10 and the first adhesive component 30, and reducing the risk of detachment of the first adhesive component 30 from the housing 10, thereby facilitating suppression of movement of the electrode assembly 20.

It can be understood that the fourth adhesive layer 3212 and the third adhesive layer 3211 may be two independent adhesive layers. The third adhesive layer 3211 and the fourth adhesive layer 3212 may alternatively be integrated adhesive layers. For example, integrated adhesive layers at different positions are divided into the third adhesive layer 3211 and the fourth adhesive layer 3212.

In some embodiments, referring to FIG. 11, the first adhesive component 30 further includes a fifth adhesive layer 3213. The fifth adhesive layer 3213 is disposed on a surface of the first substrate layer 301 facing the housing 10. The fifth adhesive layer 3213 is adhered to the second sidewall 12 of the housing 10. The fifth adhesive layer 3213 is conducive to enhancing the adhesion strength between the housing 10 and the first adhesive component 30, and reducing the risk of detachment of the first adhesive component 30 from the housing 10, thereby facilitating suppression of movement of the electrode assembly 20.

It can be understood that the third adhesive layer 3211, the fourth adhesive layer 3212, and the fifth adhesive layer 3213 may be three independent adhesive layers. The third adhesive layer 3211, the fourth adhesive layer 3212, and the fifth adhesive layer 3213 may alternatively be integrated adhesive layers. For example, integrated adhesive layers at different positions are divided into the third adhesive layer 3211, the fourth adhesive layer 3212, and the fifth adhesive layer 3213.

It should be noted that when the first adhesive component 30 is formed by the first substrate layer 301, the first adhesive layer 3111, and the second adhesive layer 3131, the first adhesive layer 3111 forms the first adhesive region 311, the second adhesive layer 3131 forms the second adhesive region 313, and the third adhesive layer 3211 forms the third adhesive region 321. When the first adhesive component 30 is formed by the first substrate layer 301, the first adhesive layer 3111, the second adhesive layer 3131, the third adhesive layer 3211, the fourth adhesive layer 3212, and the fifth adhesive layer 3213, the first adhesive layer 3111 forms the first adhesive region 311, the second adhesive layer 3131 forms the second adhesive region 313, and the third adhesive layer 3211, the fourth adhesive layer 3212, and the fifth adhesive layer 3213 collectively form the third adhesive region 321.

In some embodiments, referring to FIG. 5, a portion of a surface of the substrate layer 301 facing the electrode assembly 20 is exposed to form the first non-adhesive region 312. A portion of a surface of the substrate layer 301 facing the housing 10 is exposed to form the third non-adhesive region 322. A portion of a surface of the substrate layer 301 facing the housing 10 is exposed to form the fourth non-adhesive region 323. Such an arrangement allows the first adhesive component 30 to have a portion not adhered to the housing 10 and a portion not adhered to the electrode assembly 20 without compounding multiple adhesive tapes, thereby helping to reduce an overall thickness of the electrochemical apparatus 100 and increase an energy density of the electrochemical apparatus 100.

In some embodiments, the first adhesive layer 3111, the second adhesive layer 3131, the third adhesive layer 3211, the fourth adhesive layer 3212, and the fifth adhesive layer 3213 may be adhesive materials that are adhesive at room temperature without activation. The first adhesive layer 3111, the second adhesive layer 3131, the third adhesive layer 3211, the fourth adhesive layer 3212, and the fifth adhesive layer 3213 may alternatively be adhesive materials that are not adhesive at room temperature but become adhesive after activation through a hotpressing process.

It can be understood that the first adhesive layer 3111, the second adhesive layer 3131, the third adhesive layer 3211, the fourth adhesive layer 3212, and the fifth adhesive layer 3213 may be formed by coating predetermined regions of the substrate layer 301 with adhesive materials. Alternatively, the first adhesive layer 3111, the second adhesive layer 3131, the third adhesive layer 3211, the fourth adhesive layer 3212, and the fifth adhesive layer 3213 may be formed by fully coating both sides of the substrate layer 301 with adhesive materials and then partially removing excess adhesive materials.

In some embodiments, a material of the substrate layer 301 may be any one of PET (polyethylene terephthalate), PVC (polyvinyl chloride), or PI (polyimide).

In some embodiments, a material of the first adhesive layer 3111 includes at least one of polymethyl methacrylate, polypropylene, polyethylene, polyamide, styrene-butadiene rubber, nitrile rubber, butadiene rubber, isoprene rubber, ethylenepropylene rubber, or chloroprene rubber. The materials of the second adhesive layer 3131, the third adhesive layer 3211, the fourth adhesive layer 3212, and the fifth adhesive layer 3213 may be the same as the material of the first adhesive layer 3111 or different from the material of the first adhesive layer 3111.

In some other embodiments, referring to FIG. 12, the first adhesive component 30 further includes a first non-adhesive layer 312a, a third non-adhesive layer 322a, and a fourth non-adhesive layer 323a. The first non-adhesive layer 312a is adhered to a surface of the first adhesive layer 3111 and/or the second adhesive layer 3131 to form the first non-adhesive region 312. The third non-adhesive layer 322a is adhered to a surface of the third adhesive layer 3211 to form the third non-adhesive region 322. The fourth non-adhesive layer 323a is adhered to a surface of the third adhesive layer 3211 to form the fourth non-adhesive region 323. Thus, after the substrate layer 301 is directly entirely coated with the first adhesive layer 3111, the second adhesive layer 3131, and the third adhesive layer 3211, the first non-adhesive region 312, the third non-adhesive region 322, and the fourth non-adhesive region 323 can be formed by adhering the first non-adhesive layer 312a, the third non-adhesive layer 322a, and the fourth non-adhesive layer 323a to the first adhesive layer 3111, the second adhesive layer 3131, and the third adhesive layer 3211. Areas and positions of the first non-adhesive layer 312a, the third non-adhesive layer 322a, and the fourth non-adhesive layer 323a are adjusted, so that areas and positions of the first non-adhesive region 312, the third non-adhesive region 322, and the fourth non-adhesive region 323 can be adjusted, allowing the formation method and the adjustment method of the non-adhesive regions to have the advantages of simple operations, high efficiency, and low costs.

It can be understood that the first non-adhesive layer 312a, the third non-adhesive layer 322a, and the fourth non-adhesive layer 323a may each be a layer with no adhesive material on both sides or a layer with an adhesive material on one side and no adhesive material on the other side. As an illustrative example, the substrate layer 301, the first adhesive layer 3111, and the second adhesive layer 3131 form a double-sided adhesive tape. The first non-adhesive layer 312a, the third non-adhesive layer 322a, and the fourth non-adhesive layer 323a are single-sided adhesive tapes. The first adhesive component 30 is formed by stacking multiple adhesive tapes.

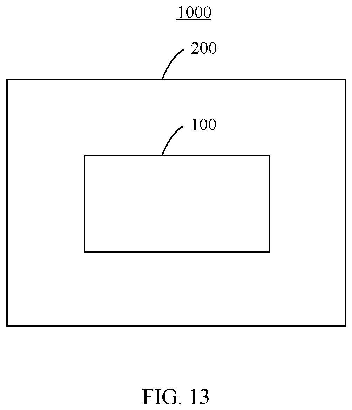

Referring to FIG. 13, an embodiment of this application further provides an electric device 1000. The electric device 1000 includes the foregoing electrochemical apparatus 100.

In some embodiments, referring to FIG. 13, the electric device 1000 further includes a device body 200, where the electrochemical apparatus 100 is installed in the device body 200 and configured to supply power to the device body 200.

In some embodiments, the electric device 1000 may be a mobile phone, a laptop computer, a tablet computer, or the like. Details are not described herein again.

Since the electric device 1000 adopts the technical solutions of any one of the foregoing embodiments of the electrochemical apparatus 100, the electric device 1000 has at least the beneficial effects brought by the technical solutions of any one of the foregoing embodiments of the electrochemical apparatus 100. Details are not described herein again.

In addition, those of ordinary skill in the art should recognize that the foregoing embodiments are only used to illustrate this application and are not intended to limit this application. Any modifications, equivalent replacements, improvements, and the like made within the spirit and principle of this application should fall within the protection scope of this application.

## Claims

1. An electrochemical apparatus, comprising:
a housing;
an electrode assembly, the electrode assembly being disposed within the housing, and the electrode assembly comprising a first side surface, a second side surface, a third side surface, and a fourth side surface, wherein along a first direction, the first side surface and the second side surface are disposed opposite each other; along a second direction, the third side surface and the fourth side surface are disposed opposite each other; the third side surface and the fourth side surface are located between the first side surface and the second side surface; and the first direction is perpendicular to the second direction; and
a first adhesive component, the first adhesive component being disposed between the housing and the electrode assembly, and the first adhesive component comprising a first side portion and a second side portion opposite each other, wherein the first side portion comprises a first adhesive region, a first non-adhesive region, and a second adhesive region arranged sequentially; the first adhesive region is adhered to the first side surface; the second adhesive region is adhered to the second side surface; and the second side portion comprises a third adhesive region, the third adhesive region being adhered to the housing; wherein
along the second direction, a projection of the first non-adhesive region overlaps the third side surface, and a projection of the third adhesive region overlaps the third side surface.

2. The electrochemical apparatus according to claim 1, wherein at least one of the following conditions is satisfied:
(1) the first direction is a thickness direction of the electrode assembly; or
(2) the second direction is a thickness direction of the electrode assembly.

3. The electrochemical apparatus according to claim 1, wherein the first adhesive component satisfies at least one of the following conditions:
(1) the first non-adhesive region comprises a first non-adhesive sub-region and a second non-adhesive sub-region, the second non-adhesive sub-region being located between the first adhesive region and the first non-adhesive sub-region, wherein along the second direction, a projection of the first non-adhesive sub-region covers the third side surface, and along the first direction, a projection of the second non-adhesive sub-region overlaps the first side surface; or
(2) the first non-adhesive region comprises a first non-adhesive sub-region and a third non-adhesive sub-region, the third non-adhesive sub-region being located between the second adhesive region and the first non-adhesive sub-region, wherein along the second direction, a projection of the first non-adhesive sub-region covers the third side surface, along the first direction, a projection of the third non-adhesive sub-region overlaps the second side surface.

4. The electrochemical apparatus according to claim 1, wherein the housing comprises a first sidewall and a second sidewall opposite each other along the first direction, and a third sidewall and a fourth sidewall opposite each other along the second direction; the first side surface is adjacent to the first sidewall; the second side surface is adjacent to the second sidewall; the third side surface is adjacent to the third sidewall; and the electrochemical apparatus satisfies at least one of the following conditions:
(1) along the second direction, the projection of the third adhesive region covers the third side surface;
(2) the third adhesive region comprises a first adhesive sub-region and a second adhesive sub-region, wherein the first adhesive sub-region is located between the third side surface and the third sidewall, and the second adhesive sub-region is located between the first side surface and the first sidewall; or
(3) the third adhesive region comprises a first adhesive sub-region and a third adhesive sub-region, wherein the first adhesive sub-region is located between the third side surface and the third sidewall, and the third adhesive sub-region is located between the second side surface and the second sidewall.

5. The electrochemical apparatus according to claim 1, wherein the housing comprises a first sidewall and a second sidewall opposite each other along the first direction, and a third sidewall and a fourth sidewall opposite each other along the second direction; the first side surface is adjacent to the first sidewall; the second side surface is adjacent to the second sidewall; the third side surface is adjacent to the third sidewall; and the electrochemical apparatus satisfies at least one of the following conditions:
(1) along the first direction, a projection of the third adhesive region does not overlap the first side surface; or
(2) along the first direction, a projection of the third adhesive region does not overlap the second side surface.

6. The electrochemical apparatus according to claim 1, wherein the first direction is a thickness direction of the electrode assembly; the housing comprises a first sidewall and a second sidewall opposite each other along the first direction, and a third sidewall and a fourth sidewall opposite each other along the second direction; the first side surface is adjacent to the first sidewall; the second side surface is adjacent to the second sidewall; the third side surface is adjacent to the third sidewall; and the electrochemical apparatus satisfies at least one of the following conditions:
(1) the first adhesive region comprises a fourth adhesive sub-region and a fifth adhesive sub-region, wherein the fourth adhesive sub-region is located between the first side surface and the first sidewall, and the fifth adhesive sub-region is located between the third side surface and the third sidewall; or
(2) the second adhesive region comprises a sixth adhesive sub-region and a seventh adhesive sub-region, wherein the sixth adhesive sub-region is located between the second side surface and the second sidewall, and the seventh adhesive sub-region is located between the third side surface and the third sidewall.

7. The electrochemical apparatus according to claim 1, wherein the first direction is a thickness direction of the electrode assembly; along the first direction, a thickness of the electrode assembly is T; along the second direction, a width of the electrode assembly is W; and the first adhesive component satisfies at least one of the following conditions:
(1) a length of the projection of the third adhesive region along the second direction in the first direction is T₁, satisfying 0.5T≤T₁≤T;
(2) a length of a projection of the first adhesive region along the first direction in the second direction is W₁, satisfying 0.1W≤W₁≤0.5W;
(3) a length of a projection of the second adhesive region along the first direction in the second direction is W₂, satisfying 0.1W≤W₂≤0.5W;
(4) along the second direction, a distance between the third adhesive region and the first adhesive region is h₁, wherein h₁≤0.25T; or
(5) along the second direction, a distance between the third adhesive region and the second adhesive region is h₂, wherein h₂≤0.25T.

8. The electrochemical apparatus according to claim 1, wherein the second direction is a thickness direction of the electrode assembly; along the second direction, a thickness of the electrode assembly is T; along the first direction, a width of the electrode assembly is W; and the first adhesive component satisfies at least one of the following conditions:
(1) a length of the projection of the third adhesive region along the second direction in the first direction is L₁, satisfying 0.5W≤L₁≤W;
(2) a length of a projection of the first adhesive region along the first direction in the second direction is L₂, satisfying 0.5T≤L₂≤T;
(3) a length of a projection of the second adhesive region along the first direction in the second direction is L₃, satisfying 0.5T≤L₃≤T;
(4) along the first direction, a distance between the third adhesive region and the first adhesive region is h₃, wherein h₃≤0.25W; or
(5) along the first direction, a distance between the third adhesive region and the second adhesive region is h₄, wherein h₄≤0.25W.

9. The electrochemical apparatus according to claim 1, wherein the first adhesive component comprises a first substrate layer, a first adhesive layer, a second adhesive layer, and a third adhesive layer; the first substrate layer is disposed between the housing and the electrode assembly; the first adhesive layer is disposed on a surface of the first substrate layer facing the first side surface; the second adhesive layer is disposed on a surface of the first substrate layer facing the second side surface; and the third adhesive layer is disposed on a surface of the first substrate layer facing the housing.

10. The electrochemical apparatus according to any one of claims 1 to 9, wherein the electrochemical apparatus further comprises a second adhesive component; the second adhesive component is disposed between the housing and the electrode assembly; the second adhesive component comprises a third side portion and a fourth side portion opposite each other; the third side portion comprises a fourth adhesive region, a second non-adhesive region, and a fifth adhesive region arranged sequentially; the fourth adhesive region is adhered to the first side surface; the fifth adhesive region is adhered to the second side surface; and the fourth side portion comprises a sixth adhesive region, the sixth adhesive region being adhered to the housing; wherein
along the second direction, a projection of the second non-adhesive region overlaps the fourth side surface, and a projection of the sixth adhesive region overlaps the fourth side surface.

11. An electric device, comprising the electrochemical apparatus according to any one of claims 1 to 10.
